# EUROPÄISCHE PATENTSCHRIFT

(11) **EP 1 858 384 B1**
(45) Veröffentlichungstag und Bekanntmachung des Hinweises auf die Patenterteilung: **17.03.2010**
(21) Anmeldenummer: 06707903.8
(22) Anmeldetag: 30.01.2006
(51) Int. Cl.: A47J 37/08

(54) **TOASTER**
TOASTER
GRILLE-PAIN

(30) Priorität: 11.02.2005 DE 102005006382
(43) Veröffentlichungstag der Anmeldung: 28.11.2007
(73) Patentinhaber: BSH Bosch und Siemens Hausgeräte GmbH, 81739 München (DE)
(72) Erfinder: SCHÖNFELDER, Thomas, 83250 Marquartstein (DE); STEFFL, Michael, 83250 Marquartstein (DE)
(86) Internationale Anmeldenummer: PCT/EP2006/050525
(87) Internationale Veröffentlichungsnummer: WO 2006/084799

(56) Entgegenhaltungen:
- EP-A- 1 420 615
- US-A- 5 673 610

## Beschreibung

Die Erfindung betrifft einen Toaster gemäß dem Oberbegriff von Anspruch 1. Die Erfindung betrifft weiterhin Gehäusebaugruppen für einen Toaster.

Moderne Toaster, aber auch Kombinationsgeräte, wie beispielsweise in der EP 1 420 615 A1 offenbart, enthalten vielfach eine elektronische Steuerung sowie elektrische Bauteile, beispielsweise Heizstäbe etc., die von der elektronischen Steuerung angesteuert werden. Bei bekannten Geräteausführungen wird die elektrische Kontaktierung dieser Komponenten dadurch ausgeführt, dass die benötigten Bauteile in das Gehäuse eingeführt und dort eingebaut werden, separat davon die Steuerplatine in das Gehäuse eingebaut wird und dass die Leitungen dann mit der Steuerplatine kontaktiert werden.

Da diese Montageschritte während der Endmontage des Toasters vorgenommen werden müssen, ist diese fehlerträchtig. Außerdem sind die Montagezeiten bei der Endmontage unerwünscht hoch, und es sind vergleichsweise qualifizierte Monteure erforderlich, die die erforderlichen Elektroarbeiten verrichten können.

Der Erfindung liegt die Aufgabe zugrunde, einen Toaster zur Verfügung zu stellen, der insbesondere im Hinblick auf die Endmontage in einfacher und fehlerfreier Weise zu fertigen ist.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Toaster dadurch auf, dass die elektrischen Bauteile zumindest teilweise in der ersten Gehäusebaugruppe angeordnet sind, dass zumindest wesentliche Bestandteile der elektronischen Steuerung in der zweiten Gehäusebaugruppe angeordnet ist, dass die erste Gehäusebaugruppe und die zweite Gehäusebaugruppe jeweils elektrische Schnittstellen aufweisen und dass beim Zusammenfügen der Gehäusebaugruppen über die elektrischen Schnittstellen eine elektrische Verbindung hergestellt wird. Bei der Endmontage des Toasters muss also nichts anderes mehr getan werden, als die Gehäusebaugruppen zusammenzustecken.

Die elektrische Kontaktierung der elektrischen Bauteile in der ersten Gehäusebaugruppe mit der elektronischen Steuerung in der zweiten Gehäusebaugruppe erfolgt automatisch.

Erfindungsgemäß ist die elektrische Schnittstelle der ersten Gehäusebaugruppe durch einen an der ersten Gehäusebaugruppe befestigten Stecker und die elektrische Schnittstelle der zweiten Gehäusebaugruppe durch auf einer Steuerplatine angeordnete Kontaktfahnen gebildet. Die Erfindung lässt sich also unter Einsatz handelsüblicher Steckverbindungen realisieren.

Weiterhin kann vorgesehen sein, dass in der zweiten Gehäusebaugruppe mechanische Bauteile angeordnet sind, über die ein Absenken eines in der ersten Gehäusebaugruppe angeordneten Röstgutträgers veranlasst werden kann. Durch das Absenken des Röstgutträgers wird der Toaster bevorzugt eingeschaltet. Die zweite Gehäusebaugruppe ist also nicht darauf beschränkt, die elektronische Steuerung zu beherbergen; vielmehr sind auch mechanische Bauteile vorgesehen, um den Röstgutträger abzusenken.

In Weiterbildung der Erfindung ist vorgesehen, dass die erste Gehäusebaugruppe und die zweite Gehäusebaugruppe jeweils mindestens eine mechanische Schnittstelle aufweisen, über die eine Kraftübertragung erfolgt. Wie bereits erwähnt, ist die zweite Gehäusebaugruppe nicht darauf beschränkt, die elektronischen Komponenten zu beherbergen. Da auch mechanische Komponenten in der zweiten Baugruppe vorgesehen sind, die mit Komponenten in der ersten Gehäusebaugruppe zusammenwirken sollen, ist neben der elektrischen Schnittstelle auch eine mechanische Schnittstelle vorhanden, die verschiedene Aspekte und Komponenten aufweist.

Beispielsweise kann vorgesehen sein, dass die mechanische Schnittstelle der ersten Gehäusebaugruppe einen mit dem Röstgutträger verbundenen Mitnehmer aufweist, dass die mechanische Schnittstelle der zweiten Gehäusebaugruppe einen Schalthebel aufweist und dass durch ein Absenken des Röstgutträgers gleichzeitig ein Einschalten des Toasters dadurch erfolgt, dass der Mitnehmer den Schalthebel umlegt.

Ebenfalls ist es möglich, dass die mechanische Schnittstelle der ersten Gehäusebaugruppe eine fest mit einem über eine Röstgutaufnahmeöffnung schwenkbaren Deckel verbundene Welle aufweist, dass die mechanische Schnittstelle der zweiten Gehäusebaugruppe einen auf die Welle aufsetzbaren Drehknopf aufweist und dass der Deckel durch Drehen des Drehknopfes verschlossen und durch axiales Verschieben des Drehknopfes geöffnet werden kann.

Ein weiterer Aspekt kann darin bestehen, dass die mechanische Schnittstelle der ersten Gehäusebaugruppe ein Bimetallelement aufweist, das sich in Abhängigkeit der insbesondere im Bereich des Röstraums vorliegenden Temperatur an seinem der zweiten Gehäusebaugruppe zugewandten Ende bewegt, dass die mechanische Schnittstelle der zweiten Gehäusebaugruppe ein durch die Bewegung des Bimetallelementes verschiebbares Gegenstück aufweist und dass durch die Bewegung des Bimetallelementes eine Öffnungsbewegung des Deckels veranlasst und/oder eine Schließbewegung des Deckels verhindert werden kann.

Es ist weiterhin nützlich, dass die zweite Gehäusebaugruppe eine Anzeige aufweist, die von der elektronischen Steuerung angesteuert wird. Die Anzeige in der zweiten Gehäusebaugruppe anzuordnen kann vorteilhaft sein, da diese dann in der Nähe der elektronischen Steuerung angeordnet sein kann. Auf diese Weise lässt sich die Anzeige unabhängig von der Kontaktierung zwischen der ersten Gehäusebaugruppe und der zweiten Gehäusebaugruppe ansteuern. Folglich kann die elektrische Schnittstelle zwischen den Gehäusebaugruppen einfach, das heißt insbesondere mit vergleichsweise wenigen Kontakten, realisiert sein.

Die Erfindung betrifft weiterhin eine erste Gehäusebaugruppe für einen Toaster mit einem Gehäuse, das zusätzlich zu der genannten ersten Gehäusebaugruppe eine zweite Gehäusebaugruppe und eine in dem Gehäuse angeordneten elektronische Steuerung sowie in dem Gehäuse angeordnete elektrische Bauteile aufweist, wobei vorgesehen ist, dass zumindest wesentliche Komponenten der elektronischen Steuerung in der zweiten Gehäusebaugruppe angeordnet sind, die zweite Gehäusebaugruppe eine elektrische Schnittstelle aufweist und beim Zusammenbau der Gehäusebaugruppen über die elektrische Schnittstelle eine elektrische Verbindung hergestellt wird.

Weiterhin betrifft die Erfindung eine zweite Gehäusebaugruppe für einen Toaster mit einem Gehäuse, das zusätzlich zu der genannten zweiten Gehäusebaugruppe eine erste Gehäusebaugruppe und eine in dem Gehäuse angeordnete elektronische Steuerung sowie in dem Gehäuse angeordnete elektrische Bauteile aufweist, wobei vorgesehen ist, dass die elektrischen Bauteile zumindest teilweise in der ersten Gehäusebaugruppe angeordnet sind, die erste Gehäusebaugruppe eine elektrische Schnittstelle aufweist und beim Zusammenbau der Gehäusebaugruppen über die elektrische Schnittstelle eine elektrische Verbindung zu der in der zweiten Gehäusebaugruppe angeordneten elektronischen Steuerung hergestellt wird. Die erfindungsgemäßen Gehäusebaugruppen realisieren somit die Vorteile und Besonderheiten des erfindungsgemäßen Toasters.

Die Erfindung wird nun mit Bezug auf die begleitenden Zeichnungen anhand besonders bevorzugter Ausführungsformen beispielhaft erläutert. Dabei zeigt:
- Figur 1: eine perspektivische Darstellung eines erfindungsgemäßen Toasters;
- Figur 2: eine weitere perspektivische Darstellung eines erfindungsgemäßen Toasters;
- Figur 3: eine weitere perspektivische Darstellung eines erfindungsgemäßen Toasters;
- Figur 4: eine perspektivische Teildarstellung einer ersten Gehäusebaugruppe sowie eine perspektivische Darstellung einer zweiten Gehäusebaugruppe eines erfindungsgemäßen Toasters;
- Figur 5: eine perspektivische Teildarstellung der ersten Gehäusebaugruppe sowie eine perspektivische Darstellung der zweiten Gehäusebaugruppe eines erfindungsgemäßen Toasters während des Zusammenfügens der Gehäusebaugruppen;
- Figur 6: eine perspektivische Darstellung eines Teils der zweiten Gehäusebaugruppe sowie eines mit der zweiten Gehäusebaugruppe zusammenwirkenden Röstgutträgers eines erfindungsgemäßen Toasters;
- Figur 7: eine weitere perspektivische Darstellung eines Teils der zweiten Gehäusebaugruppe sowie eines mit der zweiten Gehäusebaugruppe zusammenwirkenden Röstgutträgers eines erfindungsgemäßen Toasters;
- Figur 8: eine perspektivische Teildarstellung der ersten Gehäusebaugruppe sowie von der zweiten Gehäusebaugruppe zugeordneten Komponenten eines erfindungsgemäßen Toasters in einem ersten Zustand;
- Figur 9: eine perspektivische Teildarstellung der ersten Gehäusebaugruppe sowie von der zweiten Gehäusebaugruppe zugeordneten Komponenten eines erfindungsgemäßen Toasters in einem zweiten Zustand;
- Figur 10: eine perspektivische Teildarstellung der ersten Gehäusebaugruppe sowie von der zweiten Gehäusebaugruppe zugeordneten Komponenten eines erfindungsgemäßen Toasters in einem dritten Zustand;
- Figur 11: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters;
- Figur 12: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem ersten Zustand;
- Figur 13: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem zweiten Zustand;
- Figur 14: eine perspektivische Teilansicht der ersten Gehäusebaugruppe des erfindungsgemäßen Toasters in einem ersten Zustand;
- Figur 15: eine perspektivische geschnittene Teilansicht der ersten Gehäusebaugruppe des erfindungsgemäßen Toasters in einem zweiten Zustand;

- Figur 16: eine perspektivische geschnittene Teilansicht der ersten Gehäusebaugruppe des erfindungsgemäßen Toasters in einem dritten Zustand;
- Figur 17: eine Röstgutträgerverriegelungseinrichtung in einem ersten Zustand;
- Figur 18: die Röstgutträgerverriegelungseinrichtung gemäß Figur 17 in einem zweiten Zustand;
- Figur 19: eine weitere Röstgutträgerverriegelungseinrichtung in einem ersten Zustand;
- Figur 20: die weitere Röstgutträgerverriegelungseinrichtung gemäß Figur 19 in einem zweiten Zustand;
- Figur 21: einen Hebe-/Senkmechanismus für einen Brötchenaufsatz in einem ersten Zustand;
- Figur 22: den Hebe-/Senkmechanismus für einen Brötchenaufsatz in einem zweiten Zustand.

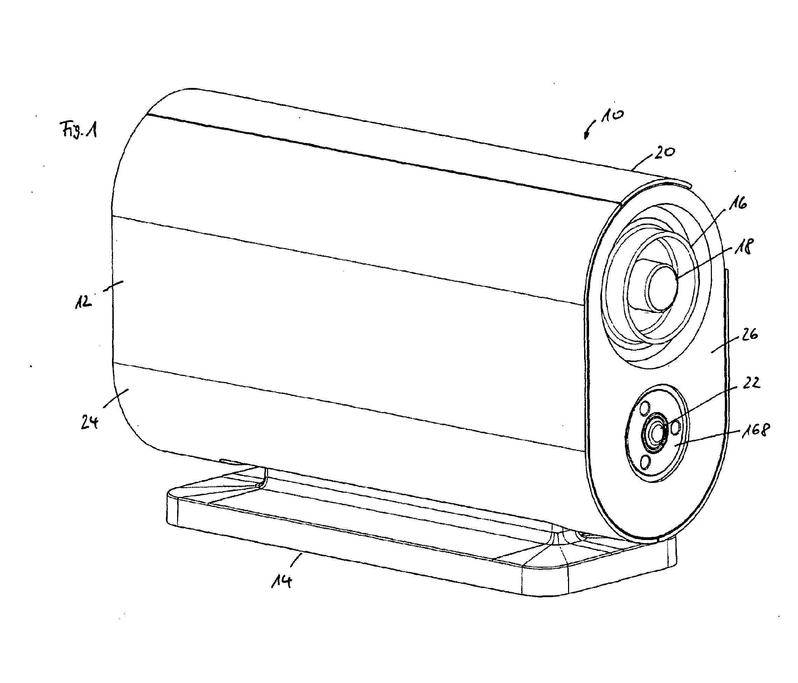

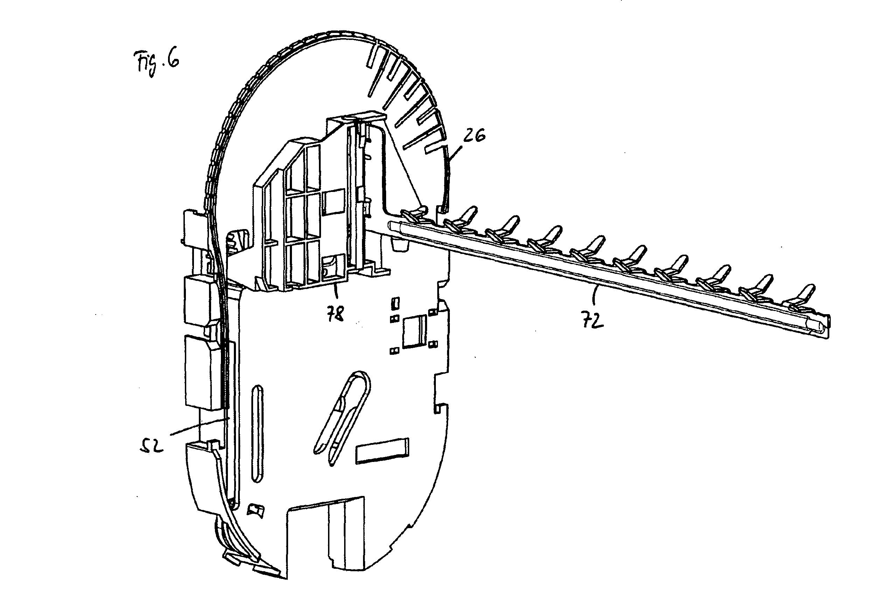

Figur 1 zeigt eine perspektivische Darstellung eines erfindungsgemäßen Toasters. Der Toaster 10 umfasst ein Gehäuse 12 und einen das Gehäuse 12 tragenden Fuß 14. An beziehungsweise in dem Gehäuse 12 sind Bedienelemente angeordnet. Ein erstes Bedienelement ist als Drehknopf 16 ausgebildet. Dieser Drehknopf 16 dient insbesondere dem Absenken eines in dem Toaster angeordneten Röstgutträgers 72 (vergleiche Figur 6). Ein weiteres Bedienelement ist ebenfalls als Drehknopf 18 ausgebildet. Dieser Drehknopf 18 dient dazu, einen Deckel 20 mittels einer Drehbewegung des Drehknopfes 18 zu verschließen. Weiterhin lässt sich durch Drücken des Drehknopfes 18 und einer damit verbundenen axialen Verschiebung des Drehknopfes gegen eine Federkraft der Deckel 20 öffnen. Der konzentrisch mit dem zur Deckelbedienung vorgesehenen Drehknopf 18 angeordnete Drehknopf 16 veranlasst beim Absenken des Röstgutträgers weiterhin ein Öffnen des Deckels 20, sofern sich dieser im geschlossenen Zustand befindet, sowie ein Einschalten des Toasters 10. Als weiteres Bedienelement ist ein Ausschalter 22 vorgesehen. Bei Betätigung dieses Ausschalters 22 wird der Röstgutträger angehoben, und der Toaster 10 wird in einen stromlosen Zustand überführt. Ein weiteres Bedienelement ist als Stellrad 168 ausgebildet. Dieses Stellrad 168 dient in erster Linie dazu, eine Voreinstellung des Röstgrades vorzunehmen. Das Gehäuse 12 besteht im Wesentlichen aus zwei Gehäusebaugruppen 24, 26, wobei die bisher genannten Bedienelemente im Wesentlichen der zweiten Gehäusebaugruppe 26 zugeordnet sind.

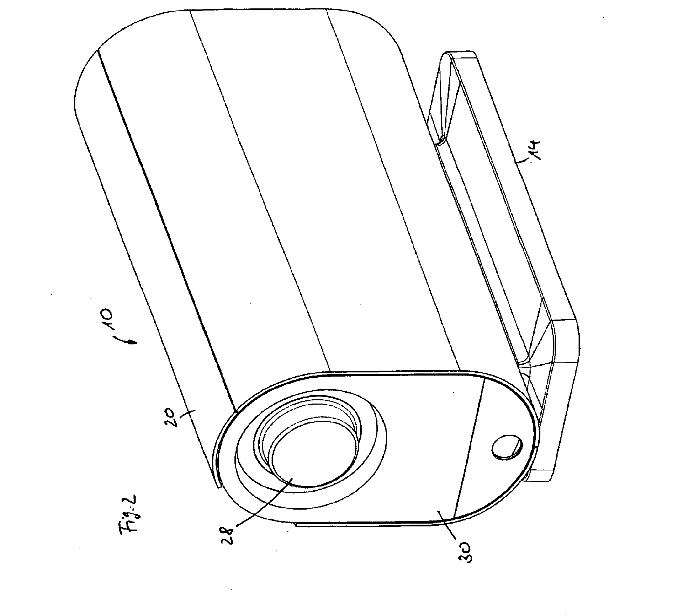

Figur 2 zeigt eine weitere perspektivische Darstellung eines erfindungsgemäßen Toasters. In dieser Darstellung des Toasters 10 ist die der zweiten Gehäusebaugruppe 26 gegenüberliegende Seite erkennbar. Auch hier ist ein Drehknopf 28 in einer dritten Gehäusebaugruppe 30 vorgesehen. Dieser Drehknopf 28 dient dem Anheben und dem Absenken eines im Toaster 10 integrierten Brötchenaufsatzes. Der Begriff Brötchenaufsatz bedeutet im Rahmen der vorliegenden Offenbarung nicht notwendigerweise, dass dieser vom Toaster abnehmbar und auf den Toaster wieder aufsetzbar ist. Vielmehr werden auch fest mit dem Toaster verbundene Mechanismen als Brötchenaufsatz bezeichnet.

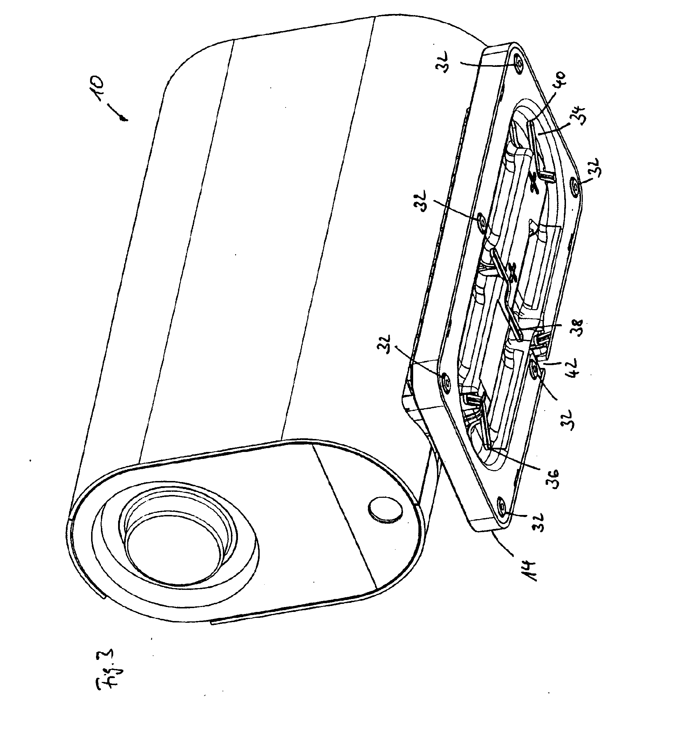

Figur 3 zeigt eine weitere perspektivische Darstellung eines erfindungsgemäßen Toasters. An dem Fuß 14 des Toasters sind mehrere rutschfeste Standnoppen 32 sowie eine Kabelaufnahme 34 vorgesehen. Ein (nicht dargestelltes) Stromkabel wird im (teilweise) aufgewickelten Zustand durch Halteelemente 36, 38, 40 gehalten, so dass es auch beim Anheben des Toasters nicht aus der Kabelaufnahme 34 herausfällt. Um das Stromkabel im (teilweise) aufgewickelten oder im abgewickelten Zustand aus dem Bereich unter dem Fuß 14 herauszuführen, ist eine seitlich angeordnete Durchführung 42 vorgesehen.

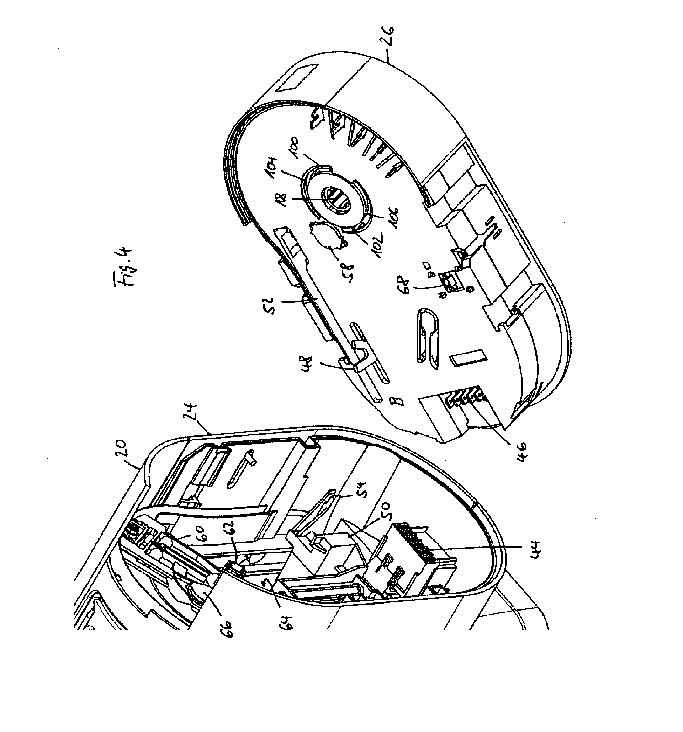

Figur 4 zeigt eine perspektivische Teildarstellung einer ersten Gehäusebaugruppe sowie eine perspektivische Darstellung einer zweiten Gehäusebaugruppe eines erfindungsgemäßen Toasters. Das Gehäuse ist in seine erste Gehäusebaugruppe 24 und seine zweite Gehäusebaugruppe 26 zerlegt. In der ersten Gehäusebaugruppe 24 sind (nicht dargestellte) Heizstäbe angeordnet, die durch eine in der zweiten Gehäusebaugruppe 26 angeordnete (nicht dargestellte) elektronische Steuerung angesteuert werden. Um eine elektrische Verbindung zwischen den elektrischen Bauteilen in der ersten Gehäusebaugruppe 24 und der elektronischen Steuerung in der zweiten Gehäusebaugruppe 26 herzustellen, weisen die erste Gehäusebaugruppe 24 und die zweite Gehäusebaugruppe 26 jeweils elektrische Schnittstellen 44, 46 auf, die als Stecker 44 in der ersten Gehäusebaugruppe 24 beziehungsweise als auf einer (nicht dargestellten) Steuerungsplatine aufgesetzte Steckfahnen 46 realisiert sind. Aufgrund einer geeigneten und stabilen Anordnung dieser Verbindungselemente erfolgt beim Zusammenfügen des Gehäuses automatisch eine elektrische Kontaktierung.

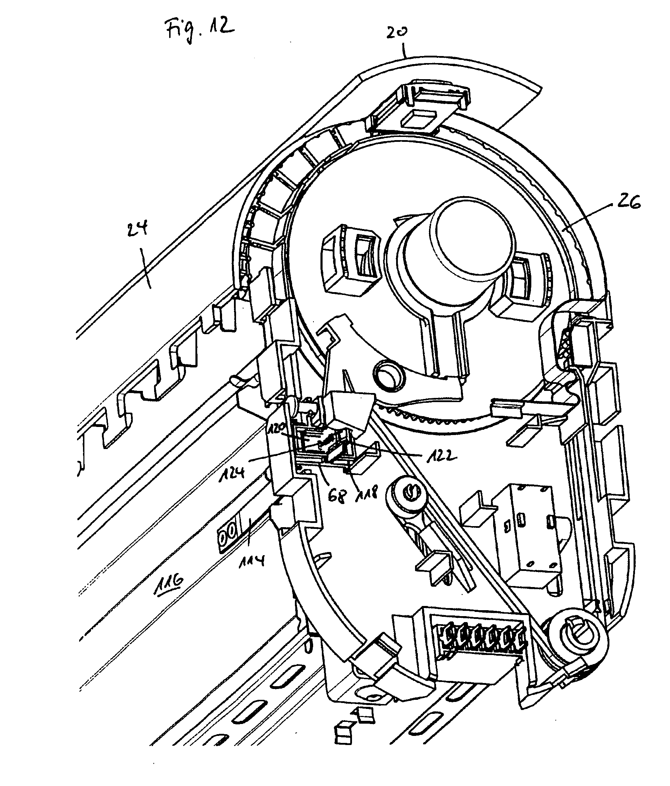

Die zweite Gehäusebaugruppe enthält weiterhin einen Schalthebel 48, der von einem in der ersten Gehäusebaugruppe 24 angeordneten, mit dem Röstgutträger verbundenen Mitnehmer 50 beim Absenken des Röstgutträgers nach unten umgelegt und beim Anheben des Röstgutträgers nach oben umgelegt wird. Der Schalthebel 48 ist an einem in der zweiten Gehäusebaugruppe 46 angeordneten Schalter 126 (vergleiche zum Beispiel Figur 12) angebracht. Der Mitnehmer 50 ist in der vorliegenden Darstellung in der abgesenkten Position des Röstgutträgers dargestellt. Über das Zusammenwirken von Schalthebel 48 und Mitnehmer 50 liegt eine mechanische Schnittstelle zwischen der ersten Gehäusebaugruppe und der zweiten Gehäusebaugruppe vor.

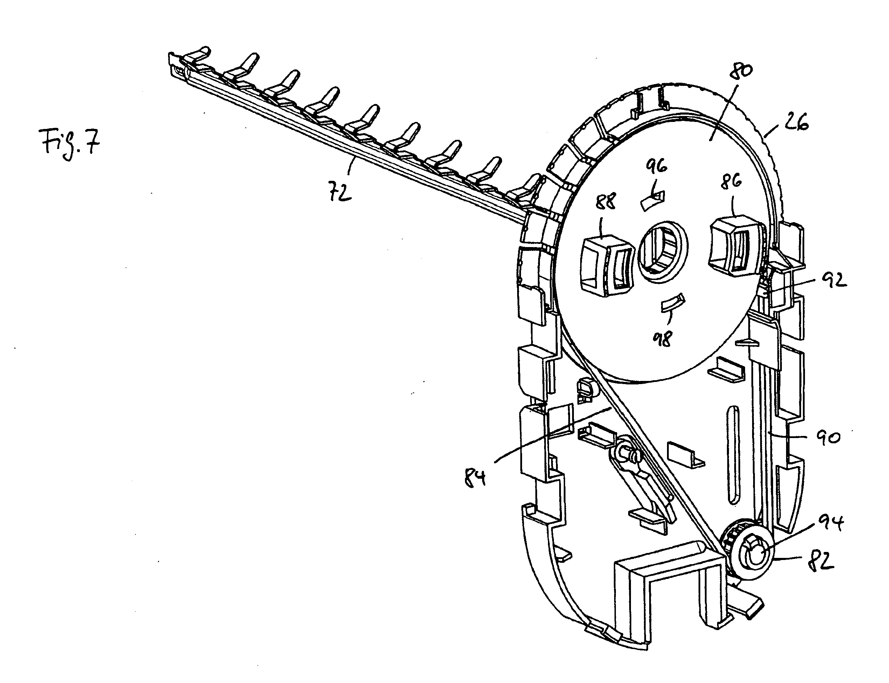

Die mechanische Schnittstelle zwischen den Gehäusebaugruppen 24, 26 eröffnet weiterhin die Möglichkeit, durch Betätigung des Drehknopfes 16 den Röstgutträger und den Mitnehmer 50 in deren abgesenkte Stellung zu bewegen. Zu diesem Zweck ist ein Schlitz 52 in der zweiten Gehäusebaugruppe 26 vorgesehen, durch den eine in der zweiten Gehäusebaugruppe 26 angeordnete Mechanik (siehe hierzu insbesondere Figur 7 und die entsprechende Erläuterung) erreichbar ist. Diese Mechanik wirkt mit einem im zusammengebauten Zustand des Gehäuses durch den Schlitz 52 ragendes Gegenstück 54 zusammen, so dass hierdurch der Röstgutträger und der Mitnehmer 50 gegen die Kraft einer (nicht dargestellten) Feder abgesenkt werden können. Im abgesenkten Zustand wird die in der ersten Gehäusebaugruppe 24 angeordnete Mechanik verriegelt. Durch Freigeben dieser Verriegelung kann die Mechanik durch die Federkraft angehoben werden, wobei diese Bewegung mit einer Bewegung der Mechanik in der zweiten Gehäusebaugruppe 26 korreliert ist. Insbesondere findet auch eine Drehung des Drehknopfes 16 beim Anheben des Röstgutträgers statt. Diese Drehbewegung und damit auch die Aufwärtsbewegung des Röstgutträgers werden durch ein gedämpftes Zahnrad 58 gedämpft, was insbesondere im Zusammenhang mit Figur 7 noch näher erläutert wird.

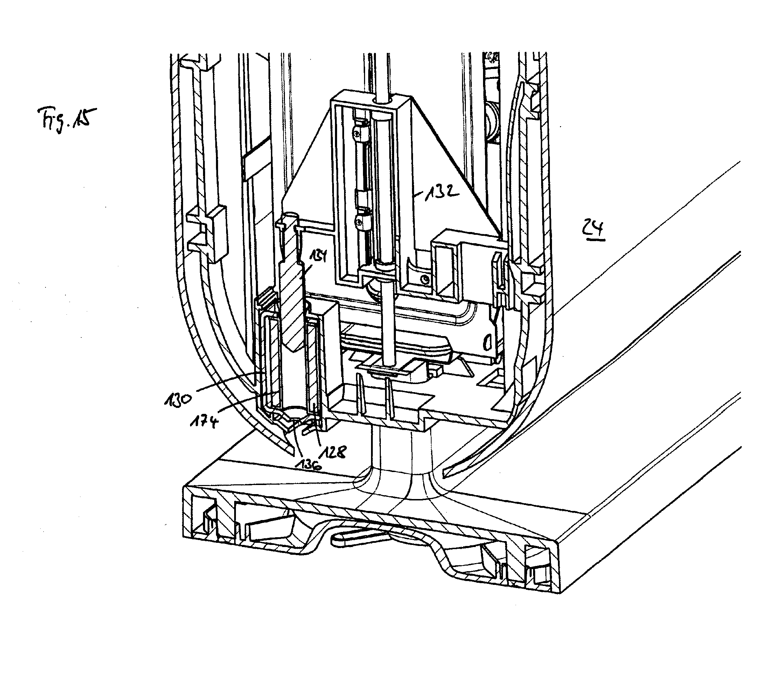

Es ist weiterhin ein Teil der die Bewegung des Deckels 20 führenden Mechanik gezeigt. Der im geöffneten Zustand dargestellte Deckel 20 ist über ein sich radial erstreckendes Verbindungselement 60 mit einer Welle 62 verbunden. Auf dieser Welle 62 sitzt im zusammengebauten Zustand des Gehäuses der Drehknopf 18 auf, dessen Inneres in der vorliegenden Darstellung zu erkennen ist. Indem der Drehknopf 18 gedreht wird, kann der Deckel 20 gegen eine Federkraft geschlossen werden. Die die Gegenkraft aufbringende Feder greift an einem Gehäuseabschnitt 64 sowie einem mit der Welle 62 in Verbindung stehenden Fortsatz an, wobei dieser Fortsatz dem Verbindungselement 60 radial gegenüberliegend angeordnet ist. Die Feder 138 und der Fortsatz 140 werden in der vorliegenden Darstellung durch das Gehäuse verdeckt (vergleiche Figur 15). Im geschlossenen Zustand kann der Deckel 20 verriegeln und durch axiales Verschieben, das heißt durch Drücken des Drehknopfes 18 wieder freigegeben werden. Der Deckel wird dann durch die Federkraft wieder in seine geöffnete Stellung überführt, wobei diese Bewegung wiederum durch ein in seiner Drehbewegung gedämpftes Zahnrad 66, das mit einem gezahnten Abschnitt der Welle 62 kämmt, gedämpft ist.

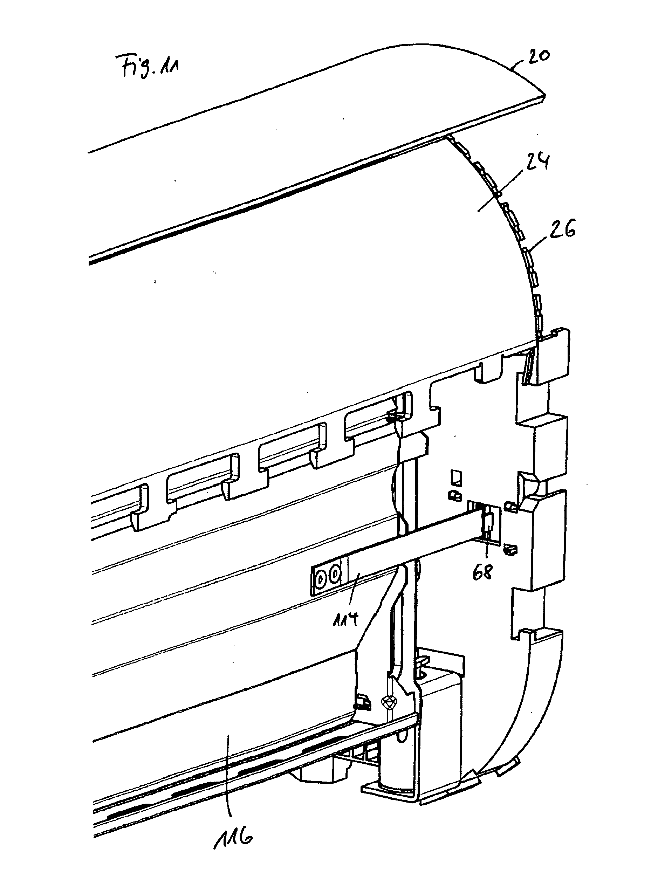

Eine weitere Komponente der mechanischen Schnittstelle zwischen erster Gehäusebaugruppe 24 und zweiter Gehäusebaugruppe 26 bildet ein an der zweiten Gehäusebaugruppe 26 angeordnetes Kippelement 68, das mit einem in der zweiten Gehäusebaugruppe 26 angeordneten, hier nicht sichtbaren Bimetallelement zusammenwirkt. Zur Erläuterung der diesbezüglichen Funktionsweise wird insbesondere auf die Figuren 11 und 12 sowie deren Beschreibung verwiesen.

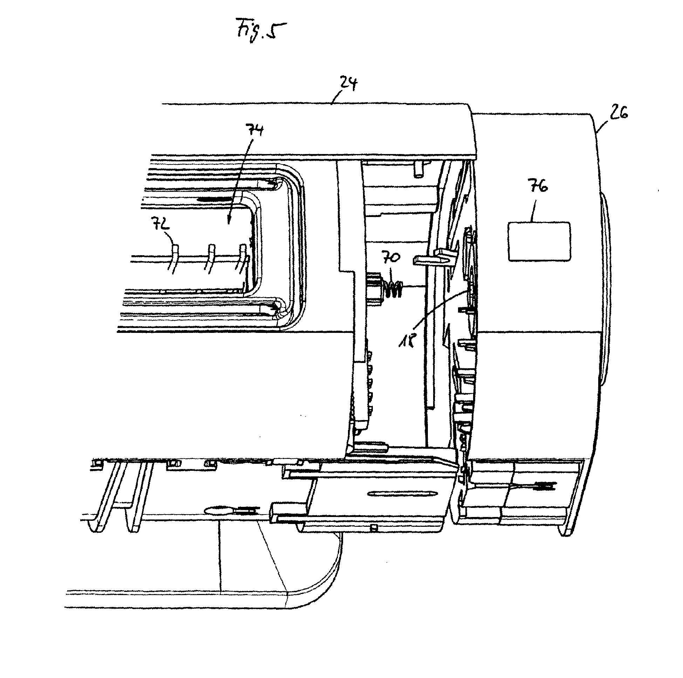

Figur 5 zeigt eine perspektivische Teildarstellung der ersten Gehäusebaugruppe sowie eine perspektivische Darstellung der zweiten Gehäusebaugruppe eines erfindungsgemäßen Toasters während des Zusammenfügens der Gehäusebaugruppen. Es ist eine an der Welle 62 angeordnete Feder 70 zu erkennen, die die Gegenkraft gegen die durch Drücken bewirkte axiale Verschiebung des Drehknopfes 18 aufbringt. Diese Feder 70 muss nicht notwendigerweise an der Welle 62 befestigt sein. Sie kann sich auch innerhalb der zweiten Gehäusebaugruppe abstützen.

In der vorliegenden Darstellung sind in der ersten Gehäusebaugruppe 24 weiterhin ein Röstgutträger 72 sowie eine Röstgutaufnahmeöffnung 74 erkennbar. In der zweiten Gehäusebaugruppe 26 ist ein Anzeigeelement 76 vorgesehen, das zur digitalen Anzeige des vorgewählten Röstgrades sowie der noch verbleibenden Röstdauer in Echtzeit dient. Das Anzeigeelement 76 steht über eine Flachkabelverbindung direkt mit der in der zweiten Gehäusebaugruppe 26 angeordneten elektronischen Steuerung in Verbindung und wird von dieser angesteuert. Außerhalb des eigentlichen Röstvorganges zeigt das Anzeigeelement einen vorgewählten Röstgrad an. Vorzugsweise muss das Anzeigeelement zum Zwecke der Röstgradanzeige aktiviert werden, was beispielsweise durch ein eigens hierfür vorgesehenes Bedienelement, ein Betätigen des Ausschalters 22 und/oder ein Betätigen des Stellrades 168 erfolgen kann. Ebenfalls ist es denkbar, dass das vorzugsweise als LCD-Anzeige realisierte Anzeigeelement bei minimalem Energieverbrauch permanent in Betrieb ist, sofern der Toaster mit dem Stromnetz gekoppelt ist. Ebenfalls ist eine Pufferung des Betriebs der Anzeige selbst bei ausgestecktem Toaster denkbar. Wird der Toaster im Zusammenhang mit dem Absenken des Röstgutträgers in Betrieb genommen, so wird auf dem Anzeigeelement 76 nicht länger der vorgewählte Röstgrad sondern die für den Röstvorgang benötigte Restzeit in Echtzeit angezeigt. Die für den Röstvorgang benötigte Restzeit kann von verschiedenen Größen abhängen, die für die Bestimmung und die Anzeige der Restzeit berücksichtigt werden können, beispielsweise von der Temperatur des Toasters vor dem Röstgang und/oder der seit dem letzten Röstvorgang verstrichenen Zeit. Ebenfalls kann der beim letzten Röstvorgang eingestellte Röstgrad berücksichtigt werden, da bei sehr kurzen Röstzeiten eine geringere Vorwärmung des Toasters vorliegen wird als bei sehr langen Röstzeiten. Über die Berücksichtigung der verstrichenen Zeit seit dem letzten Röstvorgang erhält man letztlich auch ein Maß für die Vorwärmung des Toasters. Es ist beispielsweise möglich, dass Werte für die verstrichene Zeit in der elektronischen Steuerung im Rahmen einer Tabelle mit Temperaturschätzwerten korreliert sind beziehungsweise mit irgendwelchen Parametern, die bei der Umrechnung von vorgewähltem Röstgrad in zu Anfang des Röstvorgangs verbleibende Echtzeit berücksichtigt werden.

Figur 6 zeigt eine perspektivische Darstellung eines Teils der zweiten Gehäusebaugruppe sowie eines mit der zweiten Gehäusebaugruppe zusammenwirkenden Röstgutträgers eines erfindungsgemäßen Toasters. Es ist der Teil der zweiten Gehäusebaugruppe 26 darstellt, der im zusammengebauten Zustand des Toasters der ersten Gehäusebaugruppe zugewandt ist. Zusätzlich sind ein Röstgutträger 72 und eine Röstgutträgerhalterung 78 dargestellt. Die Röstgutträgerhalterung 78 und hierdurch auch der Röstgutträger 72 sind nach unten entlang des Schlitzes 52 verschiebbar.

Figur 7 zeigt eine weitere perspektivische Darstellung eines Teils der zweiten Gehäusebaugruppe sowie eines mit der zweiten Gehäusebaugruppe zusammenwirkenden Röstgutträgers eines erfindungsgemäßen Toasters. Hier ist der in der zweiten Gehäusebaugruppe 26 angeordnete Mechanismus zum Verschieben des Röstgutträgers 72 und zum Einschalten des Toasters erkennbar. Es ist wiederum die im zusammengebauten Zustand des Toasters der ersten Gehäusebaugruppe zugewandte Seite der zweiten Gehäusebaugruppe dargestellt, wobei nun das Innere der zweiten Gehäusebaugruppe sichtbar ist. Es sind ein Riemenrad 80 und ein Umlenkrad 82 erkennbar, über die ein Zahnriemen 84 gelegt ist. Das Riemenrad 80 und das Umlenkrad 82 weisen zum Zwecke der Kraftvermittlung mit dem Zahnriemen 84 jeweils eine Außenverzahnung auf. An dem Riemenrad 80 sind zwei Steckaufnahmen 86, 88 angeordnet, in die Fortsätze des hier nicht dargestellten Drehknopfes 16 (vergleiche zum Beispiel Figur 1) in axiale Richtung einsteckbar sind. Somit kann das Riemenrad 80 durch eine Drehbewegung des genannten Drehknopfes 16 ebenfalls in Rotation versetzt werden. Folglich führt der senkrecht verlaufende Riemenabschnitt 90 des Zahnriemens 84 eine Translationsbewegung aus, die durch eine Drehbewegung des Riemenrades 80 erzeugt wird. Einem mit dem Röstgutträger 72 über die Röstguthalterung 78 verbundenen Gegenstück 92, das in den Zahnriemen 84 eingreift, wird so durch Drehung des Riemenrades 80 eine translatorische Bewegung vermittelt.

Die Bewegung des Zahnriemens 84 ist gedämpft. Dies wird durch mehrere Maßnahmen erreicht. Zum einen reibt der Zahnriemen 84 abschnittsweise an Gehäusebereichen beziehungsweise gehäusefesten Fortsätzen, zum anderen sind das Riemenrad 80 und das Umlenkrad 82 in ihrer Drehbewegung gedämpft. Das Umlenkrad 82 ist direkt durch ein mit dem Umlenkrad 82 konzentrisch angeordnetes Dämpfungselement 94 gedämpft. Das Riemenrad ist indirekt dadurch gedämpft, dass es in einem bezüglich seines Außenumfangs radial innenliegenden gezahnten Bereiches mit einem in seiner Drehbewegung gedämpften Zahnrad 58 (vergleiche Figur 4) kämmt. Durch die Dämpfung der Bewegung des Zahnriemens 84 wird das Hochschnellen des Röstgutträgers gebremst. Dies verringert die Geräuschentwicklung bei sich abschaltendem Toaster, und ein Herausschleudern des Röstgutes wird vermieden.

An dem Riemenrad 80 sind weiterhin Öffnungen 96, 98 erkennbar. Von diesen Öffnungen erstrecken sich in Richtung des dargestellten Gehäuseabschnittes 26 Fortsätze 100, 102 (vergleiche Figur 4), die in Öffnungsschlitzen 104, 106 des dargestellten Gehäuseabschnittes beweglich sind. Da die Öffnungsschlitze 104, 106 begrenzt sind, werden somit zwei Anschläge für die Drehbewegung des Riemenrades 80 zur Verfügung gestellt.

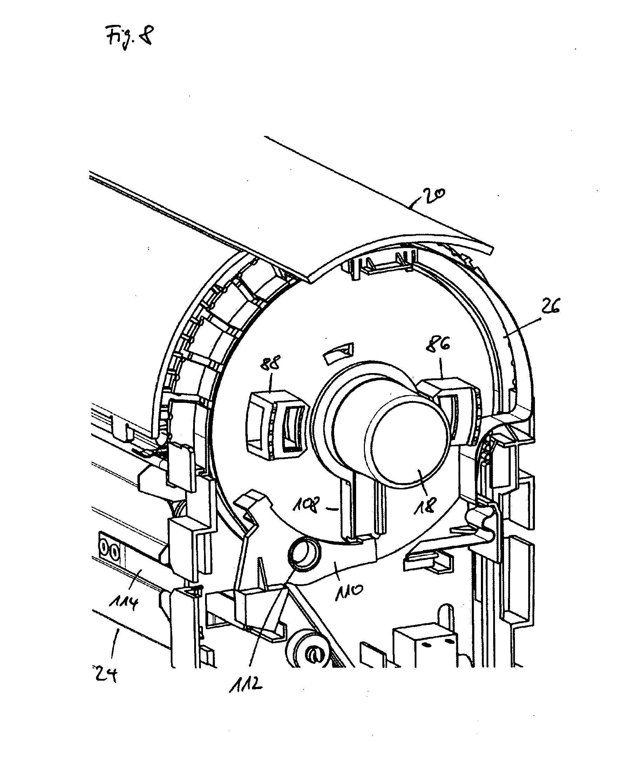

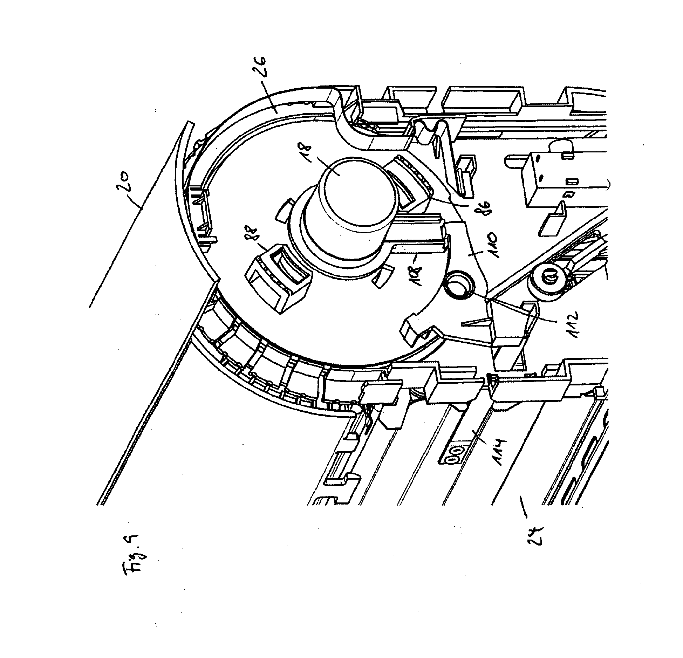

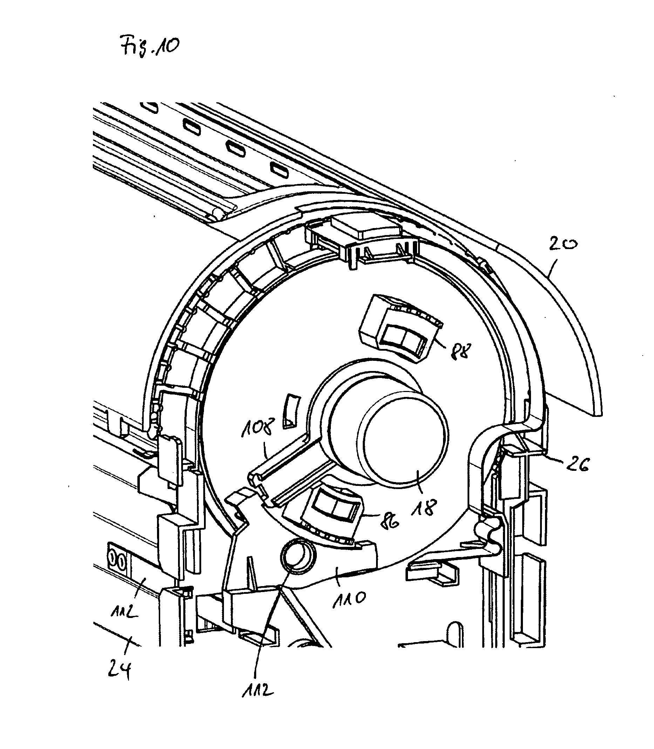

Figur 8 zeigt eine perspektivische Teildarstellung der ersten Gehäusebaugruppe sowie von der zweiten Gehäusebaugruppe zugeordneten Komponenten eines erfindungsgemäßen Toasters in einem ersten Zustand. Figur 9 zeigt eine perspektivische Teildarstellung der ersten Gehäusebaugruppe sowie von der zweiten Gehäusebaugruppe zugeordneten Komponenten eines erfindungsgemäßen Toasters in einem zweiten Zustand. Figur 10 zeigt eine perspektivische Teildarstellung der ersten Gehäusebaugruppe sowie von der zweiten Gehäusebaugruppe zugeordneten Komponenten eines erfindungsgemäßen Toasters in einem dritten Zustand. In diesen Darstellungen ist die zweite Gehäusebaugruppe 26 in die erste Gehäusebaugruppe 24 eingesetzt, wobei allerdings nur der der ersten Gehäusebaugruppe 24 zugewandte Gehäuseteil der zweiten Gehäusebaugruppe 26 dargestellt ist, um das Innere der zweiten Gehäusebaugruppe 26 erkennen zu können. Zur Vervollständigung der zweiten Gehäusebaugruppe 26 würde noch der der ersten Gehäusebaugruppe 24 abgewandte Gehäuseteil der zweiten Gehäusebaugruppe 26 aufgesetzt; nachfolgend würde der Drehknopf 16 in die Steckaufnahmen 86, 88 des Riemenrades 80 eingesetzt. Dabei rastet der Drehknopf 16 so in den Steckaufnahmen 86, 88 ein, dass ein unbeabsichtigtes Lösen ausgeschlossen ist. Die Steckaufnahme 86 erfüllt noch eine weitere Funktion, was anhand der Figuren 8 bis 10 erläutert wird. In dem in Figur 8 dargestellten Zustand ist der Deckel 20 geschlossen. Dies korrespondiert damit, dass ein Fortsatz 108 des Drehknopfes 18 über ein als Wippe 110 ausgebildetes Halte- beziehungsweise Verriegelungselement gehalten wird. Die Wippe 110 ist auf einer Achse 112 gelagert und um einige Grad schwenkbar. Wird nun das Riemenrad 80 im Uhrzeigersinn gedreht, so bewegt sich die Steckaufnahme 86 auf den Fortsatz 108 des Drehknopfes 18 zu. Ein Zustand, bei dem die Steckaufnahme 86 gerade Kontakt mit dem Fortsatz 108 aufnimmt, ist in Figur 9 dargestellt. In den in den Figuren 8 und 9 gezeigten Zuständen wird die Wippe 110 dadurch in dem den Drehknopf 18 verriegelnden Zustand gehalten, dass ein Bimetallelement 114 die Wippe 110 in die entsprechende Richtung mit Kraft beaufschlagt. Wird nun allerdings das Riemenrad 80 von Figur 9 ausgehend weiter im Uhrzeigersinn gedreht, so kann gegen die Kraft der Wippe 118 beziehungsweise des Bimetallelementes 114 die Steckaufnahme 86 als Mitnehmer dienen, so dass letztlich ein weiterer Zustand gemäß Figur 10 erreicht wird. In diesem Zustand ist der Deckel 20 geöffnet. Da durch die Drehbewegung des Riemenrades 80 einerseits das Röstgut abgesenkt und andererseits der Toaster eingeschaltet wird, kann durch die Zwangsmitnahme des Drehknopfes 18 ein Betrieb des Toasters bei geschlossenem Deckel 20 verhindert werden. Erst wenn der Toaster ausgeschaltet ist und das Riemenrad dementsprechend, ausgehend von Figur 10, gegen den Uhrzeigersinn zurückgedreht ist, kann der Deckel durch Drehen des Drehknopfes 18 wieder geschlossen werden, wobei hierzu allerdings weitere Vorraussetzungen erfüllt sein müssen, was nachfolgend mit Bezug auf die Figuren 11 bis 13 erläutert wird.

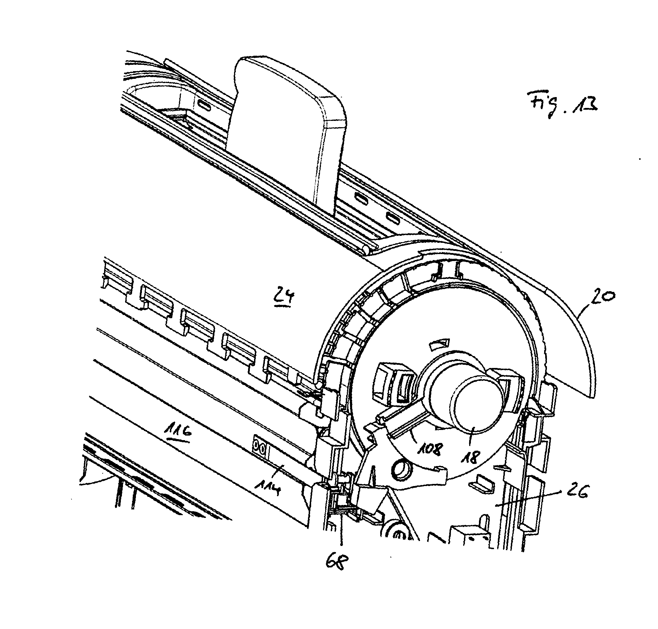

Figur 11 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters. Figur 12 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem ersten Zustand. Figur 13 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem zweiten Zustand. Auf die erste Gehäusebaugruppe 24 ist wiederum der der ersten Gehäusebaugruppe 24 zugewandte Gehäuseteil der zweiten Gehäusebaugruppe 26 aufgesetzt. An einem in der ersten Gehäusebaugruppe 24 angeordneten, den Röstraum begrenzenden Reflektor 116 ist das bereits erwähnte Bimetallelement 114 mit thermisch leitender Verbindung zum Reflektor 116 angeordnet. Folglich führt das Bimetallelement 114 temperaturabhängige Bewegungen durch. Das Bimetallelement 114 ragt in die zweite Gehäusebaugruppe 26 hinein. Dort steht es mit einem als Adapter wirkenden Kippelement 68 in Verbindung. Bei Erwärmung des Reflektors 116 und somit des Bimetallelementes 114 bewegt sich das in das Kippelement 68 hineinragende Ende des Bimetallelementes 114 von der Mittelebene des Toasters weg nach außen, das heißt in der Darstellung gemäß Figur 11 nach rechts und in den Darstellungen gemäß den Figuren 12 und 13 nach links. In den Darstellungen der Figuren 12 und 13 ist das Innere der zweiten Gehäusebaugruppe 26 gezeigt, wobei auch Einzelheiten des Kippelementes 68 zu erkennen sind. Das Kippelement 68 umfasst im Wesentlichen ein mit dem Gehäuse vorzugsweise mit Spiel verbundenes Rahmenelement 118 und einen darin horizontal gleitenden Schlitten 120 auf. Senkrecht zu dem Rahmenelement 118 und dem Schlitten 120 ist ein die Öffnung des Rahmenelementes 118 in vertikale Richtung überbrückendes Brückenelement 122 vorgesehen. Dieses Brückenelement ist über eine Feder 124 mit dem Schlitten verbunden. In der in Figur 12 dargestellten Situation kippt das Brückenelement 122 in Richtung der vertikalen Mittelebene des Toasters, wobei die hierdurch eingenommene Endstellung durch die Feder 124 stabilisiert wird. Das Brückenelement stützt sich dabei an dem Rahmenelement 118 ab. In dieser Endstellung des Brückenelementes 122 nimmt die Wippe 110 ihre erste Stellung ein, in der sie den Deckel geschlossen hält. Bewegt sich nun das Bimetallelement 114 von der vertikalen Mittelebene des Toasters weg, so wird mit dem Bimetallelement 114 der Schlitten 120 in dieselbe Richtung verschoben. Bei Überschreiten einer Übergangsstellung klappt das Brückenelement 122 um, so dass es dann eine in Richtung der Gehäusewand, das heißt weg von der vertikalen Mittelebene des Toasters, geneigte Stellung einnimmt. Dieser Zustand ist in Figur 13 dargestellt. Es ist zu erkennen, dass die Wippe 110 nun ihre zweite Stellung einnimmt, in der sie den Fortsatz 108 des Drehknopfes 18 bei geöffnetem Deckel verriegelt. Folglich wird auch der Deckel in seiner geöffneten Stellung verriegelt, was konsequent ist, da das Bimetallelement 114 und folglich der Toaster erwärmt sind, das heißt in einem Zustand, in dem der Deckel 20 nicht verschlossen werden darf.

Bei einer weiteren Ausführungsform des erfindungsgemäßen Toasters gemäß den bereits beschriebenen Figuren 8 bis 10 wurde auf das Kippelement verzichtet. Vielmehr wirkt das Bimetallelement 114 direkt auf die als Halte- und Verriegelungseinrichtung wirkende Wippe 110. Hierdurch ist die Wippe 110 auch zwischen der Halte- und der Verriegelungsstellung überführbar, wobei jedoch im Vergleich zu der Ausführungsform gemäß den Figuren 11 bis 13 weniger definierte Endzustände der Wippe vorliegen. Weiterhin kann man im Zusammenhang mit der Ausführungsform gemäß den Figuren 11 bis 13 von einem "digitalen Schaltverhalten" an einem Umschaltpunkt sprechen, während die Ausführungsform gemäß den Figuren 8 bis 10 eine kontinuierliche Bewegung der Wippe 110 zwischen den Endstellungen bewirkt.

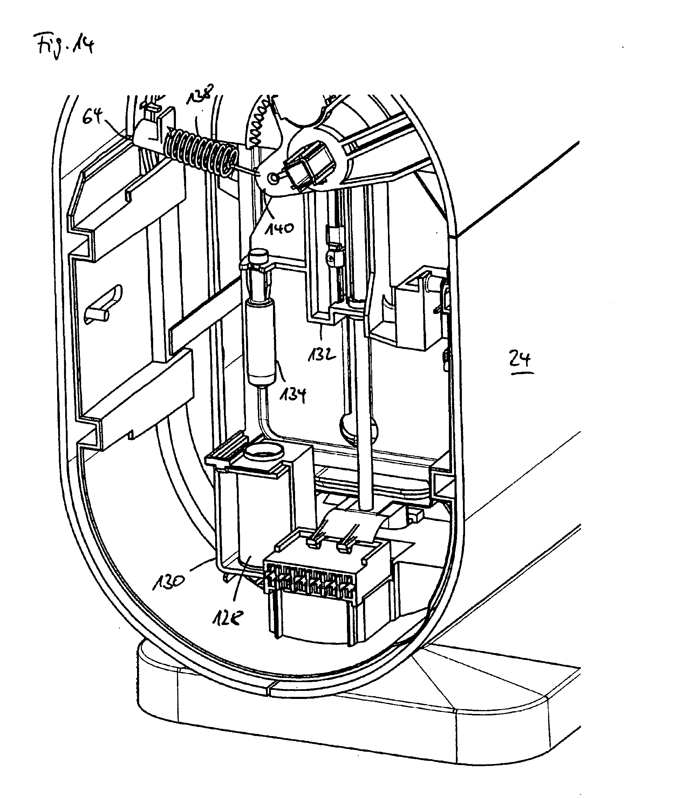

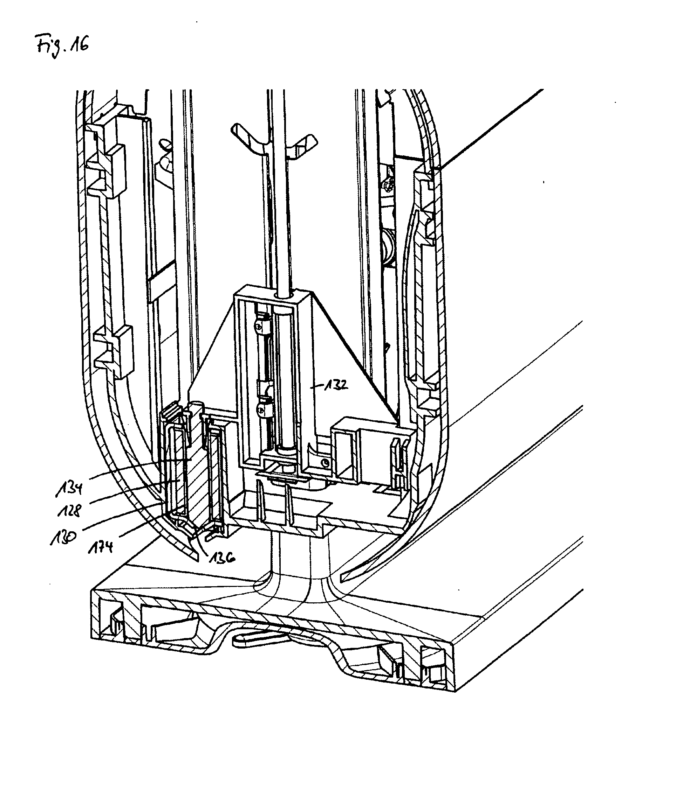

Figur 14 zeigt eine perspektivische Teilansicht der ersten Gehäusebaugruppe des erfindungsgemäßen Toasters in einem ersten Zustand. Figur 15 zeigt eine perspektivische geschnittene Teilansicht der ersten Gehäusebaugruppe des erfindungsgemäßen Toasters in einem zweiten Zustand. Figur 16 zeigt eine perspektivische geschnittene Teilansicht der ersten Gehäusebaugruppe des erfindungsgemäßen Toasters in einem dritten Zustand. Es ist ein Magnetkern 174 mit Spule 128 erkennbar, der zusammen mit einem Jochblech 130 in der ersten Gehäusebaugruppe 24 befestigt ist. In dem Röstgutabsenkmechanismus 132 ist ein Anker 134 verbunden, der hier, korrespondierend mit einer zumindest teilweise angehobenen Stellung des Röstgutträgers, ebenfalls in einer angehobenen Stellung gezeigt ist. In Figur 15 ist der Anker 134 bereits teilweise in die Spule 128 eingetaucht. In der geschnittenen Darstellung ist eine Öffnung 136 im Jochblech 130 erkennbar, die eine Verschmutzung des Magnetkerns im Inneren vermeidet; insbesondere können Brotkrümel, die von oben in den Magnetkern hineingefallen sind, durch die Öffnung 136 wieder herausfallen. Es ist bevorzugt, dass die Spule 128 vor dem Erreichen der in Figur 16 dargestellten Endlage des Ankers 134 bestromt wird, so dass die Kraft zum Erreichen der Endlage nicht beziehungsweise nur teilweise manuell aufgebracht werden muss; die Magnetkraft übernimmt im letzten Abschnitt des Absenkens diese Aufgabe. Wird der Toaster abgeschaltet, sei es aufgrund der automatischen Beendigung des Röstvorgangs oder aufgrund des Betätigens des Ausschalters, so wird das Magnetfeld durch Stromlosschalten der Spule abgebaut. Folglich kann der Anker durch die am Röstgutabsenkmechanismus angreifende Federkraft angehoben und in seine obere Endstellung gebracht werden.

Ergänzend zu Figur 14 ist zu bemerken, dass hier die Feder 138 zur Rückstellung des Deckels 20 in die geöffnete Position zu erkennen ist. Weiterhin ist auch der Fortsatz 140 an der Welle 62 gezeigt, an dem die Feder 138 eingehängt ist.

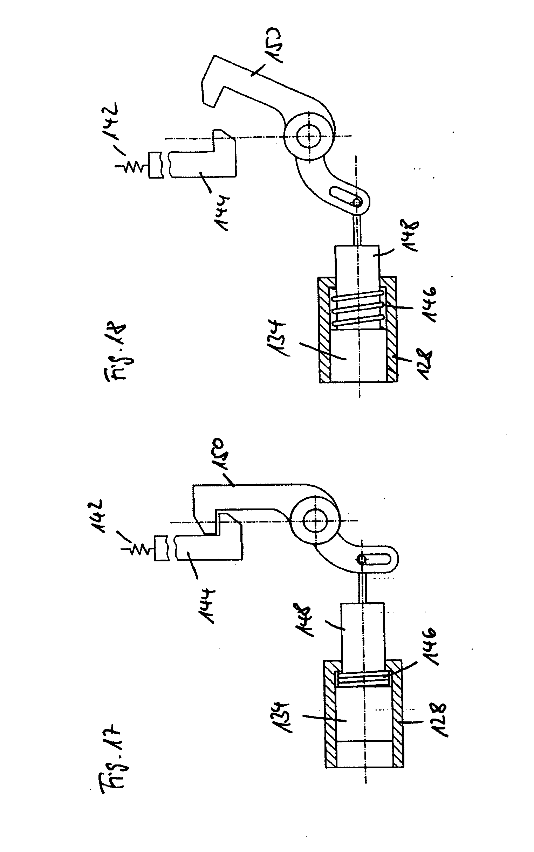

Figur 17 zeigt eine Röstgutträgerverriegelungseinrichtung in einem ersten Zustand. Figur 18 zeigt die Röstgutträgerverriegelungseinrichtung gemäß Figur 17 in einem zweiten Zustand. In dem in Figur 17 dargestellten Zustand ist der durch eine Feder 142 nach oben vorgespannte Röstgutträger 144 beziehungsweise ein damit in Verbindung stehendes Bauteil verriegelt. Die Verriegelung erfolgt dadurch, dass eine auf einem Magnetkern befindliche Spule 128 bestromt ist, so dass ein in der Spule angeordneter Anker 134 gegen die Kraft einer Feder 146 in die Spule 128 hineingetrieben wird. Folglich wird ein durch einen Fortsatz 148 am Anker 134 angelenkter Hebel 150 in seine Verriegelungsstellung überführt. Wird nun die Spule 128 stromlos, so kann die Feder 146 den Anker 134 zurückstellen, so dass der Hebel 150 den Röstgutträger 144 freigibt. Dieser kann folglich durch die Feder 142 angehoben werden.

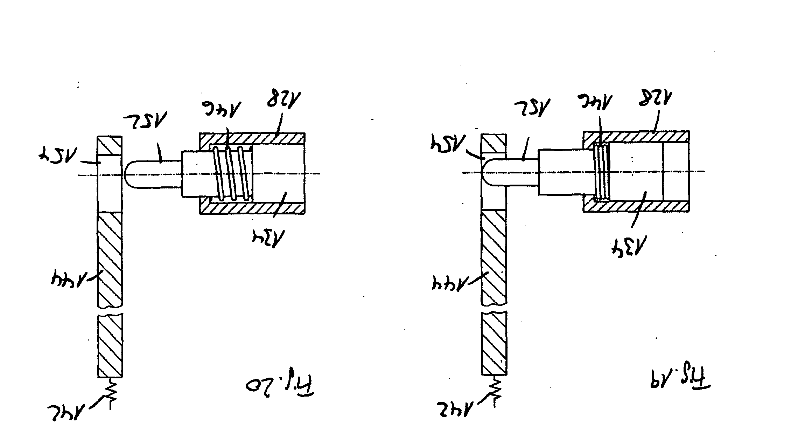

Figur 19 zeigt eine weitere Röstgutträgerverriegelungseinrichtung in einem ersten Zustand. Figur 20 zeigt die weitere Röstgutträgerverriegelungseinrichtung gemäß Figur 19 in einem zweiten Zustand. Das Arbeitsprinzip ist vergleichbar mit demjenigen gemäß den Figuren 17 und 18. Allerdings ist kein Hebel 150 zwischen dem Anker und dem Röstgutträger 144 vorgesehen. Vielmehr wird der Röstgutträger 144 dadurch in seiner abgesenkten Stellung verriegelt, dass ein Fortsatz 152 in eine Öffnung 154 des Röstgutträgers 144 eindringt. Im entriegelten Zustand gemäß Figur 20 wird der Anker durch die Federkraft zurückgetrieben, so dass der Fortsatz nicht mehr durch Eindringen in die Öffnung den Röstgutträger 144 im abgesenkten Zustand fixiert.

Den Ausführungsformen gemäß den Figuren 17 und 18 beziehungsweise 19 und 20 ist gemeinsam, dass im Vergleich zu den Ausführungsformen gemäß den Figuren 14 bis 16 eine geringere auf den Anker wirkende Kraft zum Halten des Röstgutträgers ausreichen kann, da die Federkraft der Feder 142 bei den Ausführungsformen gemäß den Figuren 17 bis 20 senkrecht zu der den Anker verschiebenden elektromagnetisch erzeugten Kraft angreift.

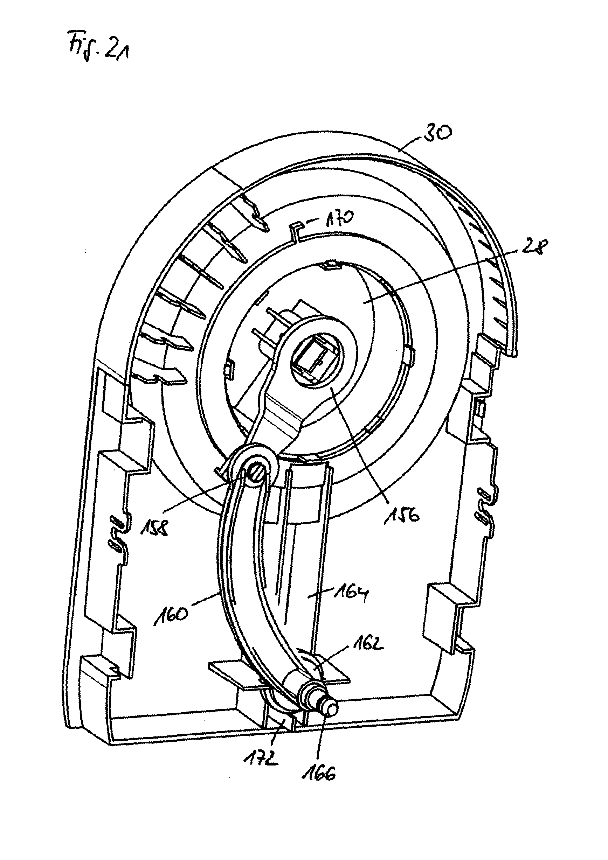

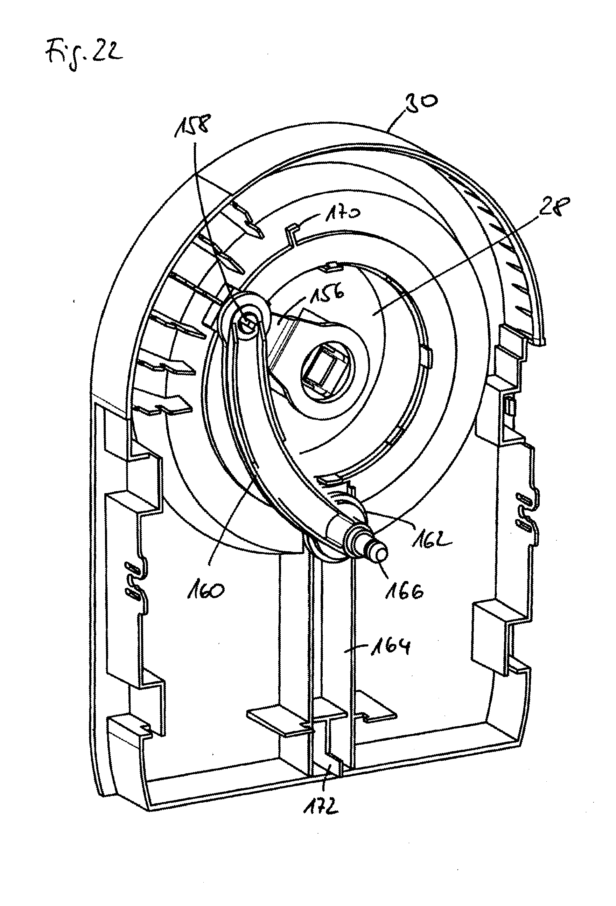

Figur 21 zeigt einen Hebe-/Senkmechanismus für einen Brötchenaufsatz in einem ersten Zustand. Figur 22 zeigt einen Hebe-/Senkmechanismus für einen Brötchenaufsatz in einem zweiten Zustand. Es ist die dritte Gehäusebaugruppe 30 dargestellt, wobei die Innenseite, das heißt die der ersten Gehäusebaugruppe zugewandte Seite erkennbar ist. An dem Drehknopf 28 ist ein Ausleger 156 angeordnet, der über ein einen Anlenkpunkt 158 bildendes Gelenk mit einer Pleuelstange 160 an einem ersten Ende der Pleuelstange 160 verbunden ist. An ihrem anderen Ende liegt die Pleuelstange 160 mit einem Führungselement 162 in einem vertikalen Führungsschlitz 164. Ein dem Führungselement 162 gegenüberliegender Fortsatz 166 bildet eine mechanische Schnittstelle zu Komponenten der ersten Gehäusebaugruppe, wobei der Fortsatz insbesondere in einen vertikal verschiebbaren Schieber zum Herausfahren beziehungsweise Einschieben eines in der ersten Gehäusebaugruppe angeordneten Brötchenaufsatzes eingreift. Betätigt man den Drehknopf 28 in der Weise, dass der Anlenkpunkt 158 angehoben wird, beispielsweise bis zu der in Figur 22 gezeigten Position, so wird auch der Fortsatz 166 und mit diesem der Schieber zum Ausfahren des Brötchenaufsatzes angehoben. Zum Absenken beziehungsweise Einfahren des Brötchenaufsatzes wird der Drehknopf 28 in die andere Richtung gedreht, so dass letztlich wieder der Zustand gemäß Figur 21 eingenommen werden kann. Im dargestellten Ausführungsbeispiel ist die Pleuelstange 160 gekrümmt ausgebildet. Dies hat den Vorteil, dass in der ersten Gehäusebaugruppe vorgesehene Komponenten, die im monierten Zustand dem Drehknopf 28 gegenüberliegen, die Bewegung des Mechanismus nicht behindern, auch nicht im vollständig angehobenen Zustand des Fortsatzes 166. Die Figuren 21 und 22 zeigen einen Mechanismus, dessen Bewegung durch das Anschlagen des Führungselementes 162 der Pleuelstange an einem oberen und unteren Ende des Führungsschlitzes 164 begrenzt ist. Der untere Anschlag 172 ist als Fortsatz an der dritten Gehäusebaugruppe 30 erkennbar. Wählt man eine längere oder anders geformte Pleuelstange, so kann die Bewegung auch durch einen Anschlag 170 an der dritten Gehäusebaugruppe 30 begrenzt werden. Der Anschlag 170 kann auch an einer anderen Position angeordnet sein, so dass ebenfalls bei den vorliegend dargestellten Längenverhältnissen ein solcher Anschlag 170 wirksam sein kann.

Es ist zu bemerken, dass der im Zusammenhang mit den Figuren 21, 22 beschriebene Hebe-/Senkmechanismus ebenso im Zusammenhang mit dem Absenken und Anheben eines Röstgutträgers verwendbar ist. Auch ist der im Rahmen der vorliegenden Offenbarung beschriebene Zahnriemenmechanismus im Zusammenhang mit dem Absenken und Anheben eines Brötchenaufsatzes einsetzbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Toaster mit einem Gehäuse (12), das mindestens eine erste und eine zweite Gehäusebaugruppe (24, 26) und eine in dem Gehäuse (12) angeordnete elektronische Steuerung sowie in dem Gehäuse (12) angeordnete elektrische Bauteile aufweist, wobei die elektrischen Bauteile zumindest teilweise in der ersten Gehäusebaugruppe (24) angeordnet sind, zumindest die wesentlichen Bestandteile der elektronischen Steuerung in der zweiten Gehäusebaugruppe (26) angeordnet sind, die erste Gehäusebaugruppe (24) und die zweite Gehäusebaugruppe (26) jeweils elektrische Schnittstellen (44, 46) aufweisen und beim Zusammenfügen der Gehäusebaugruppen (24, 26) über die elektrischen Schnittstellen (24, 26) eine elektrische Verbindung hergestellt wird, **dadurch gekennzeichnet, dass** die elektrische Schnittstellen (44) der ersten Gehäusebaugruppe (24) durch einen an der ersten Gehäusebaugruppe befestigten Stecker gebildet ist und die elektrische Schnittstelle (46) der zweiten Gehäusebaugruppe (26) durch auf einer Steuerplatine angeordnete Kontaktfahnen gebildet ist.

2. Toaster nach Anspruch 1, **dadurch gekennzeichnet, dass** in der zweiten Gehäusebaugruppe mechanische Bauteile (16, 80, 82, 84) angeordnet sind, über die ein Absenken eines in der ersten Gehäusebaugruppe angeordneten Röstgutträgers (72, 144) veranlasst wird.

3. Toaster nach einem der vorhergehenden Ansprüche, **dadurch gekennzeichnet, dass** die erste Gehäusebaugruppe (24) und die zweite Gehäusebaugruppe (26) jeweils mindestens eine mechanische Schnittstelle aufweisen, über die eine Kraftübertragung erfolgt.

4. Toaster nach Anspruch 3, **dadurch gekennzeichnet, dass** die mechanische Schnittstelle der ersten Gehäusebaugruppe (24) einen mit dem Röstgutträger verbundenen Mitnehmer (50) aufweist, die mechanische Schnittstelle der zweiten Gehäusebaugruppe (26) einen Schalthebel (48) aufweist und durch ein Absenken des Röstgutträgers (72, 144) ein Einschalten des Toasters (10) **dadurch** erfolgt, dass der Mitnehmer (50) den Schalthebel (48) umlegt.

5. Toaster nach Anspruch 3 oder 4, **dadurch gekennzeichnet, dass** die mechanische Schnittstelle der ersten Gehäusebaugruppe (24) eine mit einem über eine Röstgutaufnahmeöffnung (74) schwenkbaren Deckel (20) verbundene Welle (62) aufweist, die mechanische Schnittstelle der zweiten Gehäusebaugruppe (26) einen auf die Welle (62) aufsetzbaren Drehknopf (18) aufweist und der Deckel (20) durch Drehen des Drehknopfes (18) verschlossen und durch axiales Verschieben des Drehknopfes geöffnet werden kann.

6. Toaster nach Anspruch 5, **dadurch gekennzeichnet, dass** die mechanische Schnittstelle der ersten Gehäusebaugruppe (24) ein Bimetallelement (114) aufweist, das sich in Abhängigkeit der insbesondere im Bereich des Röstraums vorliegenden Temperatur an seinem der zweiten Gehäusebaugruppe zugewandten Ende bewegt, die mechanische Schnittstelle der zweiten Gehäusebaugruppe (26) ein durch die Bewegung des Bimetallelementes (114) verschiebbares Gegenstück (68, 110) aufweist und dass durch die Bewegung des Bimetallelementes (114) eine Öffnungsbewegung des Deckels (20) veranlasst und/oder eine Schließbewegung des Deckels verhindert werden kann.

7. Toaster nach einem der vorhergehenden Ansprüche, **dadurch gekennzeichnet, dass** die zweite Gehäusebaugruppe eine Anzeige (76) aufweist, die von der elektronischen Steuerung angesteuert wird.

## Claims

1. Toaster with a housing (12), which has at least one first and second housing subassembly (24, 26) and an electronic control arranged in the housing (12) as well as electrical components arranged in the housing (12), wherein the electrical components are arranged at least partly in the first housing subassembly (24), at least the significant components of the electronic control are arranged in the second housing subassembly (26), the first housing subassembly (24) and the second housing subassembly (26) respectively have electrical interfaces (44, 46) and when the housing subassemblies (24, 26) are joined together an electrical connection is produced by way of the electrical interfaces (24, 26), **characterised in that** the electrical interface (44) of the first housing subassembly (24) is formed by a plug fastened to the first housing subassembly and the electrical interface (46) of the second housing subassembly (26) is formed by contact blades arranged on a control circuitboard.

2. Toaster according to claim 1, **characterised in that** arranged in the second housing subassembly are mechanical components (16, 80, 82, 84) by way of which lowering of a toast material carrier (72, 144) arranged in the first housing subassembly is produced.

3. Toaster according to one of the preceding claims, **characterised in that** the first housing subassembly (24) and the second housing subassembly (26) each have at least one mechanical interface by way of which a force transmission is effected.

4. Toaster according to claim 3, **characterised in that** the mechanical interface of the first housing subassembly (24) comprises an entrainer (50) connected with the toast material carrier, the mechanical interface of the second housing subassembly (26) comprises a switching lever (48) and switching-on of the toaster (10) is effected by lowering of the toast material carrier (72, 144) **in that** the entrainer (50) trips the switch lever (48).

5. Toaster according to claim 3 or 4, **characterised in that** the mechanical interface of the first housing subassembly (24) comprises a shaft (62) connected with a cover (20) pivotable over a toast material receiving opening (74), the mechanical interface of the second housing subassembly (26) has a rotary knob (18) placeable on the shaft (62) and the cover (20) can be closed by rotating the rotary knob (18) and opened by axial displacement of the rotary knob.

6. Toaster according to claim 5, **characterised in that** the mechanical interface of the first housing subassembly (24) comprises a bimetallic element (114) which moves at its end facing the second housing assembly in dependence on the temperature present in particular in the region of the toasting space, the mechanical interface of the second housing subassembly (26) comprises a counter-member (68, 110) displaceable by the movement of the bimetallic element (114) and through the movement of the bimetallic element (114) an opening movement of the cover (20) can be produced and/or a closing movement of the cover can be prevented.

7. Toaster according to any one of the preceding claims, **characterised in that** the second housing subassembly comprises an indicator (76) controlled in drive by the electronic control.

## Revendications

1. Grille-pain comprenant un boîtier (12) qui présente au moins un premier et un deuxième sous-groupe de boîtier (24, 26) et une commande électronique disposée dans le boîtier (12) ainsi que des composants électriques disposés dans le boîtier (12), les composants électriques étant disposés au moins en partie dans le premier sous-groupe de boîtier (24), au moins les composants essentiels de la commande électronique étant disposés dans le deuxième sous-groupe de boîtier (26), le premier sous-groupe de boîtier (24) et le deuxième sous-groupe de boîtier (26) présentant respectivement des interfaces électriques (44, 46) et une liaison électrique étant établie par l'intermédiaire des interfaces électriques (44, 46) lors de l'assemblage des sous-groupes de boîtier (24, 26), **caractérisé en ce que** l'interface électrique (44) du premier sous-groupe de boîtier (24) est formée par une fiche fixée sur le premier sous-groupe de boîtier et **en ce que** l'interface électrique (46) du deuxième sous-groupe de boîtier (26) est formée par des talons de contact disposés sur une platine de commande.

2. Grille-pain selon la revendication 1, **caractérisé en ce que** des composants mécaniques (16, 80, 82, 84) sont disposés dans le deuxième sous-groupe de boîtier, par l'intermédiaire desquels un abaissement d'un support de produit à griller (72, 144) disposé dans le premier sous-groupe de boîtier est produit.

3. Grille-pain selon l'une quelconque des revendications précédentes, **caractérisé en ce que** le premier sous-groupe de boîtier (24) et le deuxième sous-groupe de boîtier (26) présentent respectivement au moins une interface mécanique par l'intermédiaire de laquelle une transmission de force est réalisée.

4. Grille-pain selon la revendication 3, **caractérisé en ce que** l'interface mécanique du premier sous-groupe de boîtier (24) présente un entraîneur (50) raccordé au support de produit à griller, **en ce que** l'interface mécanique du deuxième sous-groupe de boîtier (26) présente un levier de commutation (48) et **en ce qu'**en raison d'un abaissement du support de produit à griller (72, 144), une mise en fonction du grille-pain (10) est réalisée du fait que l'entraîneur (50) renverse le levier de commutation (48).

5. Grille-pain selon la revendication 3 ou 4, **caractérisé en ce que** l'interface mécanique du premier sous-groupe de boîtier (24) présente un arbre (62) raccordé à un couvercle (20) pivotant par l'intermédiaire d'une ouverture (74) de logement de produit à griller, **en ce que** l'interface mécanique du deuxième sous-groupe de boîtier (26) présente un bouton tournant (18) pouvant être posé sur l'arbre (62) et **en ce que** le couvercle (20) peut être fermé en tournant le bouton tournant (18) et être ouvert par déplacement axial du bouton tournant.

6. Grille-pain selon la revendication 5, **caractérisé en ce que** l'interface mécanique du premier sous-groupe de boîtier (24) présente un élément bimétallique (114) qui se déplace sur son extrémité tournée vers le deuxième sous-groupe de boîtier en fonction de la température présente notamment dans la zone de l'espace de gril, **en ce que** l'interface mécanique du deuxième sous-groupe de boîtier (26) présente un contre-élément (68, 110) déplaçable en raison du mouvement de l'élément bimétallique (114) et **en ce qu'**en raison du mouvement de l'élément bimétallique (114), un mouvement d'ouverture du couvercle (20) peut être produit et/ou un mouvement de fermeture du couvercle peut être empêché.

7. Grille-pain selon l'une quelconque des revendications précédentes, **caractérisé en ce que** le deuxième sous-groupe de boîtier (26) présente un afficheur (76) qui est commandé par la commande électronique.
